# EUROPÄISCHE PATENTSCHRIFT

(11) **EP 0 711 459 B1**
(45) Veröffentlichungstag und Bekanntmachung des Hinweises auf die Patenterteilung: **27.12.1996**
(21) Anmeldenummer: 94921575.0
(22) Anmeldetag: 16.07.1994
(51) Int. Cl.: H01M 2/06, H01M 2/04, H01M 2/12

(54) **AKKUMULATOR MIT KUNSTSTOFFGEHÄUSE**
ACCUMULATOR WITH PLASTIC HOUSING
ACCUMULATEUR POURVU D'UN BOITIER PLASTIQUE

(30) Priorität: 29.07.1993 DE 4325464
(43) Veröffentlichungstag der Anmeldung: 15.05.1996
(73) Patentinhaber: Christoph Emmerich GmbH & Co. KG, D-60435 Frankfurt am Main (DE)
(72) Erfinder: KILB, Manfred, D-60435 Frankfurt am Main (DE)
(74) Vertreter: Blumbach, Kramer & Partner
(86) Internationale Anmeldenummer: DE9400836
(87) Internationale Veröffentlichungsnummer: WO9504380

(56) Entgegenhaltungen:
- EP-A- 0 089 619
- EP-A- 0 538 039
- FR-A- 2 292 344
- FR-A- 2 359 517
- US-A- 5 197 994

## Beschreibung

Die Erfindung betrifft einen Akkumulator gemäß dem Oberbegriff des Anspruchs 1.

Derartige Akkumulatoren sind in einer Vielzahl von Gehäuseformen bekannt. Ein herkömmlicher alkalischer Akkumulator weist ein zylindrisches Gehäuse auf, das aus Metall besten und einen topfförmigen elektrolytbefüllten Behälter sowohl für die Elektroden als auch den Separator bildet. Der den positiven Polkontakt haltende Deckel ist in die Topföffnung eingesetzt. Hierbei bildet der umgebördelte Rand eine sowohl gas- als auch flüssigkeitsdichte Halterung. Bei unrunden, insbesondere bei rechteckförmigen Zellen ist ein derartiges Metallgehäuse jedoch schwierig zu fertigen.

Die Verwendung von Kunststoffgehäusen ist für Blei-Säure-Akkumulatoren bekannt und ermöglicht die Fertigung rechteckiger Gehäuse bei guter Raunausnutzung. Dieser Aufbau ist jedoch nicht auf alle Akkumulatorentypen übertragbar. Die in das Kunststoffgehäuse eingegossenen metallischen Polkontakze oder deren metallische Durchführungen weisen andere thermische Ausdehnungskoeffizienten als der Kunststoff auf und dürfen dennoch bei Erwärmung während des Ladens oder Entladens mit hohen Strömen nicht undicht werden. Während der gesamten Lebensdauer des Akkumulators muß sicherstellen sein, daß weder Gas noch Elektrolyt ungewollt austritt. Akkumulatoren mit sehr geringem Innenwiderstand, wie z.B. alkalische Nickel-Cadmium- oder Nickel-Metallhydrid-Akkumulatoren können unter hoher Strombelastung stark erhöhte Innendrucke aufbauen, die im Bereich der Polkontakte nicht zu Undichtigkeiten führen dürfen.

Zwischen Gehäuse und Polkontakt eingelegte Dichtungen, wie z.B. die als O-Ringe bezeichneten elastischen Rundschnurringe, erfordern einen zusätzlichen Fertigungsschritt des Einlegens und korrekten Positionierens der Dichtung und tragen somit negativ zu den Herstellungskosten des Akkumulators bei. Schwierige Elektrolyten, die durch hohe Kapilarwirkung eine Neigung zum Unterkriechen von Dichtungen aufweisen, wie z.B. Kalilauge, die zusätzlich eine Wanderbewegung in Richtung des negativen Potentials zeigt, können bei nicht korrekt eingelegter Dichtung oder bei nachträglich mechanisch verschobener Dichtung aus dem Gehäuse austreten und in der Folge zu Schäden führen.

Die EP-A1-0 089 619 beschreibt eine gas- und flüssigkeitsdichte Polabdichtung, die insbesondere für Bleiakkumulatoren, deren Gehäuse aus Kunststoff besteht, konstruiert ist. Zur Abdichtung wird ein aus mehreren Schichten verschiedener Materialien bestehendes Dichtungssystem vorgeschlagen, bei welchem unter anderem eine Freie Kammer den Polkontakt umgebend ausgebildet ist und Schmelzkleber sowie weitere Dichtungen an dieser Kammer angeordnet sind.

Aus der US-PS 5 197 994 sind thermische Gehäuseverschweißungen von aus Kunststoff bestehenden Batteriegehäusen bekannt.

Aus der EP-A2-0 538 039 ist eine eingelegte, aus einem Dichtungsmittel bestehende Kappe bekannt, die bei einer zylindrischen Batterie die mittlere Elektrode sowie den Polkontakt gegenüber dem Gehäuse hält und gleichzeitig eine Dichtung des Batteriegehäuses gegen austretende Fluide bildet.

Demzufolge liegt der Erfindung die Aufgabe zugrunde, einen fertigungstechnisch günstig herstellbaren Akkumulator zu schaffen, der ein dauerhaft und zuverlässig dichtes Gehäuse aufweist, das in seiner Formgebung nicht eingeschränkt ist.

Diese Aufgabe wird durch die Merkmale des Anspruchs 1 gelöst.

Die Herstellung des Gehäuses im Bereich der Polkontakte aus einem weichen und einem harten Kunststoff, die miteinander festverbunden sind, gestattet es, den weichen Kunststoff als Dichtung für die Polkontakte und/oder die Durchführungen der Polkontake zu verwenden. Hierbei kann durch die mechanische Verbindung beider Kunststoffe ein Verschieben der Dichtung durch äußere Einflüsse verhindert werden. Dieser Aufbau führt ebenfalls dazu, daß im wesentlichen nur noch eine Dichtfläche, nämlich die Dichtfläche zwischen dem weichen Kunststoff und dem Polkontakz und/oder dessen Durchführung vorhanden ist. Der Elektrolyt oder das von diesem entwickelte Gas kann somit nicht mehr entlang einer zweiten Dichtfläche zwischen Dichtung und Gehäuse entweichen. Darüber hinaus läßt sich eine dichtende Anlage des weichen Kunststoffs am Polkontakt oder dessen Durchführung so gestalten, daß die Dichtfläche stark vergrößert ist und lange Strecken bei einem Austritt unterkrochen werden müssen.

Fertigungstechnisch ist dieser Aufbau vorteilhaft, da nach dem Verbinden des weichen mit dem harten Kunststoff entsprechende Öffnungen für die Polkontakte z.B. durch Stanzen mit hoher Genauigkeit eingebracht werden können. Alternativ kann ein bereits im harten Kunststoff gehaltener Polkontakt oder dessen Durchführung nachträglich in einem Heiß-in-Heiß-Spritzschweißverfahren mit dem weichen Kunststoff umgeben werden. Es ergibt sich dabei jeweils eine vollflächige Verbindung des weichen mit dem harten Kunststoff.

Da beide Kunststoffe im wesentlichen aus dem gleichen Thermoplast-Elastomer bestehen und sich entweder durch unterschiedliche Zugabe von Weichmachern oder durch unterschiedlichen Vernetzungsgrad in ihrer Härte unterscheiden, treten keine nachteiligen thermischen Spannungen auf. Die Wahl des Thermoplast-Elastomers gestattet es, chemisch inerte Materialien, wie z.B. modifizierte Polyamide, Styrol-Ethylen-Butylene-Styrol-Copolymere odere Polypropylene zu verwenden, die gegenüber dem Elektrolyten ausgezeichente Standfestigkeiten aufweisen.

Derzeit zur Verfügung stehenden hochentwickelten Herstellungstechniken für Kunststofformteile, wie z.B. das Spritzschweißen, sind uneingeschränkt einsetzbar, wodurch eine Beschränkung der Gehäuseform nicht mehr gegeben ist.

In einer bevorzugten Ausführungsform ist die Polkappe des Polkontaktes durch Punktschweißen mit dessen Durchführung verbunden und übergreift tassenartig einen Teil des weichen Kunststoffs. Hierdurch wird die Kriechstrecke unter der Dichtung um die Anlagefläche des weichen Kunststoffs an der Polkappe erhöht. Die Polkappe wird bei einer nachträglichen Anbringung an der Durchführung durch den weichen Kunststoff korrekt positioniert.

Eine alternative Ausführungsform verwendet einen aus einem im wesentlichen tassenförmigen Niet bestehenden Polkontakt, dessen hinteres Ende bei der Fertigung so umgebördelt wird, daß es einen Teil des harten Kunststoffes hintergreift. Hierbei wird durch den umgebördelten Teil des Niets der vordere Bereich des Polkontaktes stets sicher in dichtender Anlage am weichen Kunststoff gehalten. In fertigungstechnisch günstiger Weise kann hierbei der umgebördelte Teil des Niets eine zwischen Niet und Gehäuse eingelegte leitfähige Lasche hintergreifen, die den elektrischen Kontakt zu den jeweiligen Elektroden herstellt. Somit läß sich kostengünstig in einem einzigen Arbeitsschritt durch Nieten sowohl der Polkontakt anbringen als auch dessen elektrische Verbindung herstellen.

Eine weitere fertigungstechnische Verbesserung ergibt sich wenn das Gehäuse des Akkumulators zwischen zwei Gehäuseteilen ein umlaufendes Volumen enthält, das beim Spritzschweißen des weichen Kunststoffs gleichzeitig mitausgefüllt werden kann. Der weiche Kunststoff innerhalb dieses umlaufenden Volumens dient in vorteilhafter Weise als zusätzliche Gehäusedichtung, erfordert jedoch keinen eingenen Fertigungsschritt.

Bestehen beide Gehäuseteile aus einem Kunstsstoff mit etwa gleicher Härte, können diese durch Ultraschallschweißen in einem überlappenden Bereich miteinander sicher und dauerhaft dicht verbunden werden.

In alternativer Ausgestaltung sind beide Gehäuseteile durch in einem überlappenden Bereich angeordnete Rastelemente aneinander gehalten. Hierdurch können die Gehäuseteile in fertigungstechnisch günstiger Weise durch einfaches Zusammendrücken miteinander sicher verbunden werden. Wird der weiche Kunststoff nach dem Verrasten beider Gehäuseteile in das umlaufende Volumen eingebracht kommt es durch das Spritzschweißen in diesem Bereich zu einer vollflächigen und dichten Verbindung des weichen Kunststoffs mit dem harten Kunststoff beider Gehäuseteile. Werden beide Gehäuseteile nach dem Spritzschweißen des weichen Kunststoffs miteinander verrastet, wird durch die Rastelemente eine dichtende Anlage des harten Kunststoffs des einen Gehäuseteils am weichen Kunststoff des anderen Gehäuseteils gewährleistet.

Durch Einbettung von Glasfasern in den Kunststoff, vorzugsweise mit einem Volumenanteil von etwa 40 %, lassen sich die mechanischen Eigenschaften des Gehäuses, wie seine Schlagfestigkeit, Bruch- und Biegebelastbarkeit deutlich verbessern.

Mit einem rechteckigen Akkumulatorgehäuse, in dem die Elektroden schichtweise jeweils durch den Separator getrennt übereinander angordnet sind, lassen sich ungenutzte Volumenanteile vermeiden und es kann ein Akkumulator hoher Kapazität zur Verfügung gestellt werden.

Bei gasdichten alkalischen Akkumulatoren, wie z.B. Nickel-Cadmium oder Nickel-Metallhydrid-Akkummulatoren, kann eine Sollbruchstelle als verdünnt ausgebildeter Abschnitt innerhalb des aus hartem Kunststoff bestehenden Gehäuseteils angeordnet werden. Hierdurch wird die Explosion des Akkumulators bei plötzlichem Anstieg des Innendrucks durch gezieltes Abgasen über die Sollbruchstelle verhindert.

Ein nachträgliches Befüllen des Akkumulators mit dem Elektrolyten wird durch eine verschließbare Befüllungsöffnung ermöglicht. Die Anordnung der Befüllungsöffnung näher zum positiven als zum negativen Polkontakt vermindert die Kriechwirkung bei Einsatz von Kalilauge als Elektrolyt.

In einer weiteren Ausführungsform stellt das Gehäuse des Akkumulators gleichzeitig auch einen Teil eines Gerätegehäuses eines elektrischen Gerätes dar. Hierdurch läßt sich beispielsweise die Konstruktion tragbarer Funktelefone vereinfachen und trotz eines Akkumulators hoher Kapazität deren Größe reduzieren.

Die Erfindung wird nachstehend anhand der Zeichnungen im einzelnen beschrieben. Es zeigen:

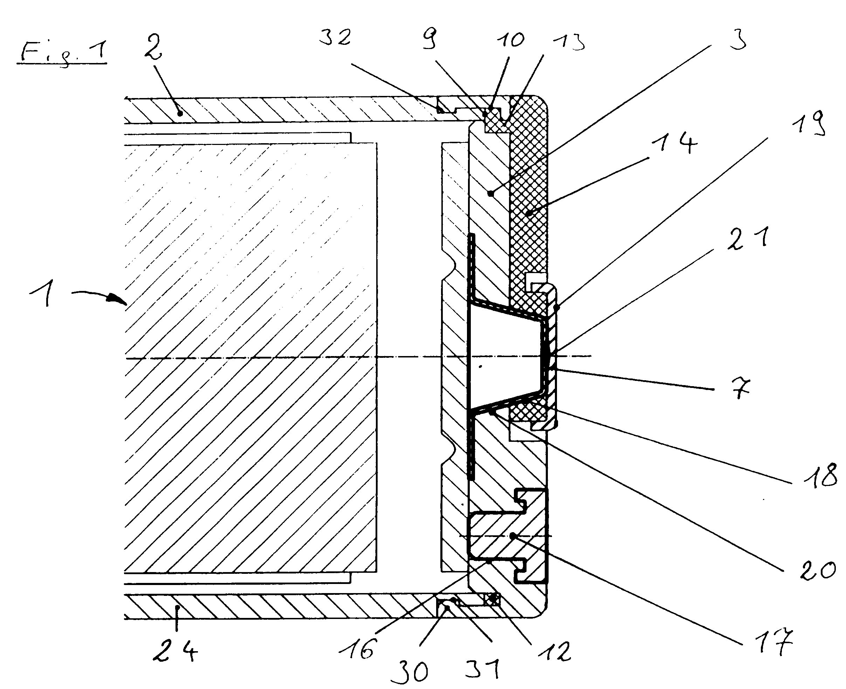

Fig. 1 einen teilweisen Querschnitt durch einen Akkumulator einer ersten erfindungsgemäßen Ausführungsform mit einer tassenförmigen Polkappe,
Fig. 2 einen teilweisen Querschnitt durch einen Akkumulator einer zweiten erfindugnsgemäßen Ausführungsform mit einem nietartigen Polkontakt,
Fig. 3 einen Querschnitt durch einen erfindugnsgemäßen Akkumulator mit rechteckigem Gehäuse und auf einer Gehäuseseite angeordneten Polkontakten,

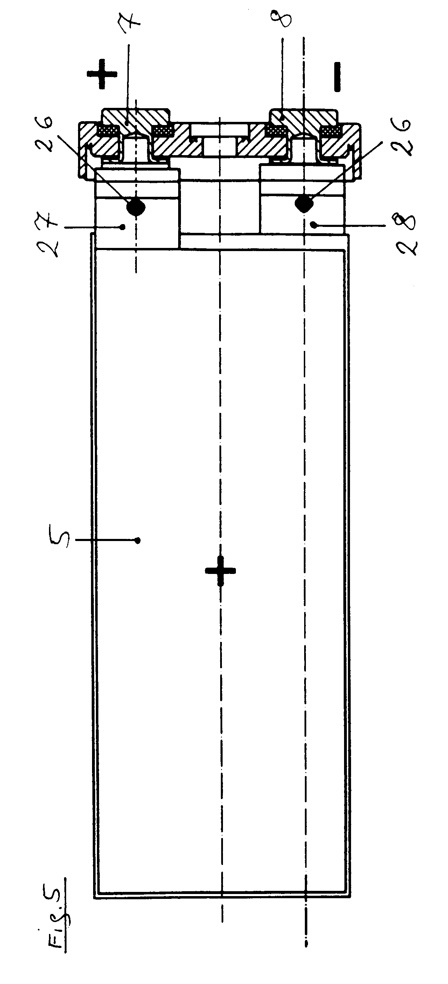

Fig. 4 einen Querschnitt durch den Akkumulator aus Fig. 3 entlang der Linie A-A,
Fig. 5 eine an einem Gehäuseteil montierte Akkumulatoren-Baugruppe während eines Fertigungs-Zwischenschritts,
Fig. 6 einen Querschnitt durch einen Akkumulator mit rechteckigem Gehäuse und auf zwei gegenüberliegenden Gehäuseseiten angeordneten Polkontakten,
Fig. 7 einen Querschnitt durch den Akkumulator aus Fig. 6 entlang der Linie B-B.

In den Figuren sind ähnliche oder gleiche Bestandteile verschiedener Ausführungsformen jeweils mit den selben Bezugszeichen versehen.

Ohne Beschränkung der vielzähligen durch die Erfindung möglichen Bauformen wird nachstehend ein rechteckiger gas-und flüssigkeitsdichter alkalischer Akkumulator beschrieben. Als gas- und flüssigkeitsdicht werden dabei Akkumulatoren bezeichnet, die unter normalen Betriebsbedingungen weder Gase noch Flüssigkeiten austreten lassen, jedoch bei Erreichen vorbestimmter Bedingungen, wie z.B. einem vorgegebenen Überdruck, gezielt Öffnungen bilden können.

Der Akkumulator 1 weist ein aus zwei Teilen 2, 3 bestehendes Gehäuse auf, das die durch den Separator 4 voneinander getrennten positiven Elektroden 5 und negativen Elektroden 6 umgibt. Im betriebsfertigen Zustand ist der Akkumulator 1 in bekannter Weise mit einem in den Figuren nicht dargestellten Elektrolyten befüllt.

Im Bereich der Polkontakte 7, 8 ist das Gehäuse zweilagig, bestehend aus einer Lage eines harten Kunststoffs 24 und einer Lage eines weichen Kunststoffs 14 ausgebildet. Der in den Figuren kreuzförmig schraffiert dargestellte weiche Kunststoff 14 ist mit dem durch schräge Linien schraffiert dargestellten harten Kunststoff 24 vollflächig verschweißt.

Bei dem verwendeten Heiß-in-Heiß-Spritzschweißen bildet sich die verschweißte Fläche beim Einspritzen des weichen Kunststoffs 14 entlang seiner Berührungsfläche zum harten Kunststoff 24. Der weiche Kunststoff 14 hat durch Beigabe von Weichmachern oder durch Wahl seines Vernetzungsgrades eine einstellbare Härte, die im Bereich bekannter Dichtungsmaterialien liegt. Der harte Kunststoff ist in seiner Härte so eingestellt, daß er die üblichen Gehäusefestigkeiten erreicht.

Als Materialien werden modifizierte Polyamide, Styrol-Ethylen-Butylene-Styrol-Copolymere und/oder Polypropylene eingesetzt. Die aus Kunststoff bestehenden Teile des Gehäuses 2, 3 weisen jeweils einen über den Umfang verlaufenden überlappenden Bereich 9, 10 auf, in dem es zu einer flächigen Anlage kommt. Mit einer umlaufenden Ultraschallschweißnaht 11 sind die Teile 9, 10 aneinander gehalten.

In weiterer erfindungsgemäßer Ausgestaltung ist oberhalb des überlappenden Bereichs 9 und vom Bereich 10 umschlossen ein entlang des Umfangs verlaufendes Volumen 12 ausgebildet, das über einen Kanal 13 mit dem Volumen des weichen Kunststoffs 14 im Bereich der Polkontakte 7, 8 verbunden. Dieses Volumen 12 wird beim Spritzschweißen des weichen Kunststoffs 14 gleichzeitig mitgefüllt. Der weiche Kunststoff 14 innerhalb des Volumens 12 ist somit einstückig mit dem weichen Kunststoff 14 im Bereich der Polkontakte 7, 8 ausgebildet und ebenfalls vollflächig mit dem harten Kunststoff 24 verschweißt.

In alternativer Ausgestaltung wird die mechanische Verbindung beider Gehäuseteile 2, 3 durch in dem überlappenden Bereich 9, 10 angeordnete Rastelemente 30, 31 bewirkt. Hierbei hintergreift im verrasteten Zustand eine umlaufende Rastnase 31 des einen Gehäuseteils 3 eine im jeweils anderen Gehäuseteil 2 ausgebildtete umlaufende Nut 2. Durch eine Anlaufschräge 32 der Rastnase 31 ist das Zusammenfügen beider Teile 2, 3 erleichtert. Der weiche Kunststoff 14 ist innerhalb des Volumens 12 entweder mit beiden Bereichen 9, 10 durch Spritzschweißen vollflächig verbunden oder ist nur mit dem Bereich 10 durch Spritzschweißen verbunden und die Rastelemente 30, 31 halten den Bereich 9 in stirnseitig dichtender Anlage am weichen Kunststoff 14.

In den harten Kunststoff 24 sind wahlweise Glasfasern oder andere bekannte inerte Fasern eingebettet. Hierbei wird ein Volumenanteil der Glasfaser von ca. 40 % bevorzugt.

Innerhalb des aus hartem Kunststoff 24 bestehenden Gehäuseteils 2, 3 ist eine Sollbruchstelle 15 als verdünnt ausgebildeter Abschnitt anordnet. Die Sollbruchstelle 15 weist eine definierte Fläche und Dicke auf, die so eingestellt sind, daß ab einem bestimmten Überdruck innerhalb des Akkumulatorgehäuses eine Öffnung gebildet wird, die zum Druckabbau führt.

Bei mit Kalilauge als Elektrolyten befüllten Akkumulatoren ist eine Durchgangsöffnung 16 vorzugsweise in der Nähe des positiven Polkontaktes 7 angeordnet und weist ein im wesentlichen T-förmiges Profil auf. Diese Öffnung 16 ist nach dem Befüllen mit einem T-förmigen Stopfen 17 verschlossen.

Eine erste Ausführungsform enthält Polkontakte 7, 8 mit einer kegelstumpfförmigen Durchführung 18, die von einer tassenförmigen Polkappe 19 übergriffen wird. Die kegelstumpfförmige Durchführung 18 liegt mit ihrem seitlich erweiterten Rand flächig am harten Kunststoff 24 an und ist in einer ebenfalls kegelstumpfförmigen Durchgangsöffnung 20 selbstzentriert gehalten. Die tassenförmige Polkappe 19 ist durch Punktschweißen mit der Durchführung 18 verbunden und übergreift den weichen Kunststoff 14 in dichtender Anlage. Ein oder mehrere Schweißpunkte 21 können sowohl vor dem Einspritzen des weichen Kunststoffs 14 als auch danach angebracht werden. In bekannter Weise ist in letzterem Fall die beim Schweißen eingebrachte thermische Energie so gewählt, daß eine plastische Verformung des weichen Kunststoffs 14 sowie des die Durchgangsöffnung 20 bildenden harten Kunststoffs 24 ausgeschlossen ist.

In einer alternativen Ausführungsform haben die Polkontakte 7, 8 einen im wesentlichen T-förmigen Querschnitt, dessen radial erweiterter Bereich die Polkappen 19 darstellt und einstückig in die Durchführung 18 übergeht. Die Durchführung 18 weist einen zylindrisch ausgehöhlten Innenraum 22 auf, der einen Tassenniet bildet und das Umbördeln des Endes 23 gestattet. Das umgebördelte Ende 23 hintergreift einen Teil des harten Kunststoffs 24 im Bereich der Polkontakte 7, 8. Hierdurch ist die Polkappe 19 in dichtender Anlage in den weichen Kunststoff 14 dauerhaft eingepreßt.

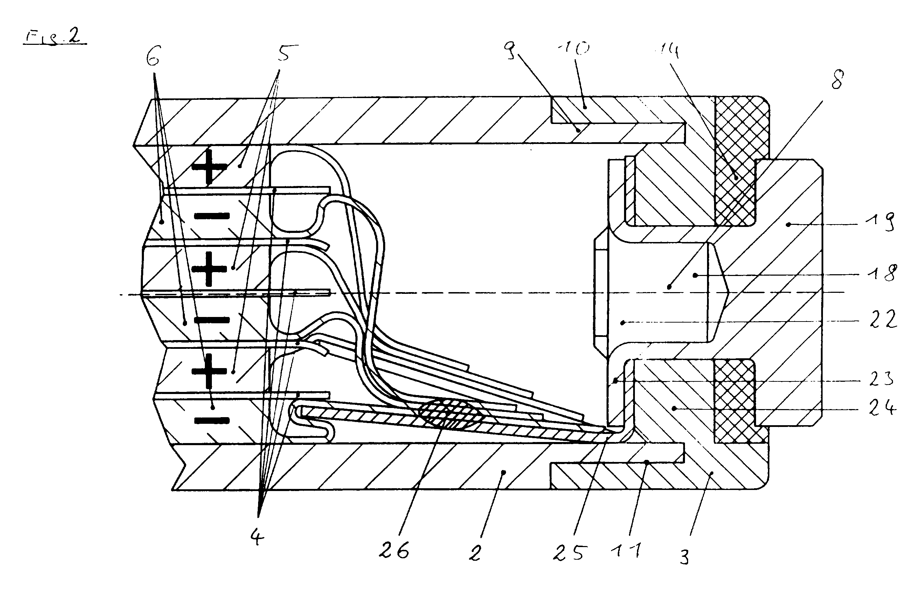

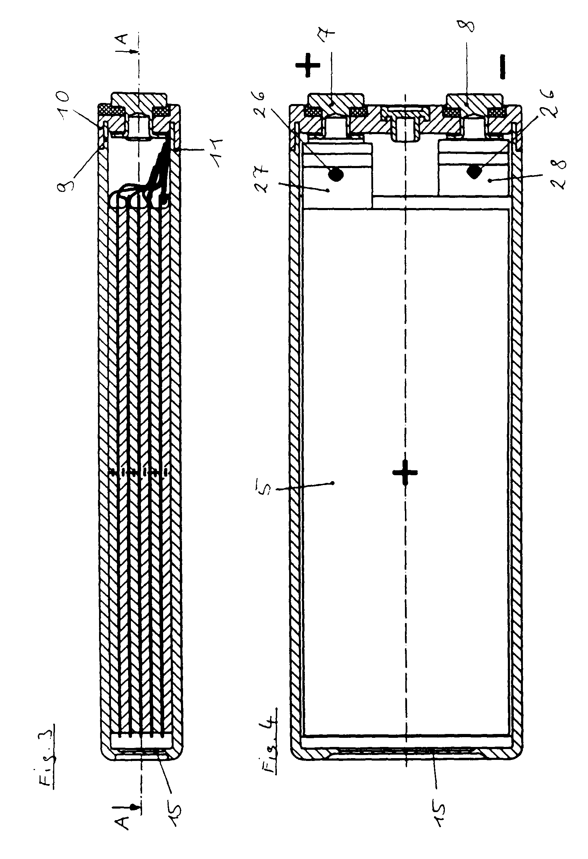

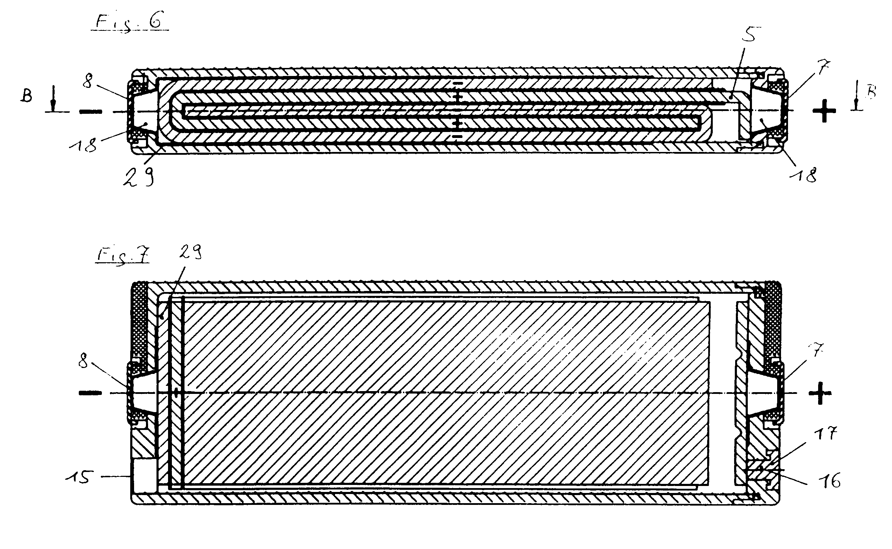

In weiterer Ausgestaltung ist zwischen dem umgebördelten Ende 23 und dem harten Kunststoff 24 eine aus Metall bestehende elektrisch leitfähige Lasche 25 eingelegt, die jeweils eine Verbindung mit den Elektroden 5, 6 herstellt. Durch einen Schweißpunkt 26 ist die Lasche 25 mit seitlich von den Elektroden hervorstehenden Anschlußfahnen 27, 28 verbunden. In dem Gehäuse 2, 3 des Akkumulators 1 sind die Elektroden 5, 6 jeweils schichtweise übereinander, wie in den Fig. 2 und 3 dargestellt, angeordnet. Alternativ sind die Elektroden 5, 6 wie in Fig. 6 gezeigt, meanderförmig unter Zwischenlage des Separators 4 übereinander gefaltet.

Bei dieser Ausführungsform, die vorzugsweise an gegenüberliegenden Gehäuseseiten jeweils einen Polkontakt 7, 8 enthält, ist der Elektrodenträger der positiven Elektrode 5 direkt mit der Durchführung 18 verbunden, während die Durchführung 18 des negativen Polkontaktes 8 direkt mit der negativen Elektrode 6 oder einem mit der negativen Elektrode 6 in Kontakt stehenden Streifen 29 verbunden ist.

Aufgrund des zweiteiligen Gehäuseaufbaus können die Elektroden 5, 6 während der Fertigung zunächst mit ihren Anschlußfahnen 27, 28 an dem Polkontakten 7, 8 und einem Gehäuseteil 3 befestigt werden. Eine solche Akkumulatoren-Baugruppe ist in Fig. 5 dargestellt, wobei die Polkontakte 7, 8 bereits innerhalb des weichen Kunststoffs 14 und des harten Kunststoffs 24 dichtend gehalten sind.

Eine derartige Baugruppe kann sowohl mit dem in den Figuren dargestellten Gehäuseteil 2 verbunden werden als auch in ein entsprechendes Gehäuse eines Elektrogerätes eingesetzt werden. Der Akkumulator 1 bildet dann mit seinem Gehäuse einen Teil des Gerätegehäuses des elektrischen Gerätes.

## Patentansprüche

1. Akkumulator mit
einem gas- und flüssigkeitsdichten, elektrolytbefüllten Gehäuse,
in dem durch einen Separator voneinander getrennte Elektroden angeordnet sind, die jeweils mit von der Außenseite des Gehäuses zugänglichen Polkontakten elektrisch verbunden sind, dadurch gekennzeichnet, daß
das Gehäuse (2, 3) im Bereich der Polkontakte (7, 8) aus einem weichen Kunststoff (14) und einem harten Kunststoff (24) besteht, die miteinander fest verbunden sind,
wobei der weiche Kunststoff (14) eine Dichtung für die Polkontakte (7, 8) und/oder die Durchführungen (18) der Polkontakte (7, 8) bildet.

2. Akkumulator nach Anspruch 1,
dadurch gekennzeichnet, daß
der weiche Kunststoff (14) und der harte Kunststoff (24) des Gehäuses (2, 3) vollflächig miteinander durch Spritzschweißen verbunden sind.

3. Akkumulator nach Anspruch 1 oder 2,
dadurch gekennzeichnet, daß
der weiche Kunststoff (14) und der harte Kunststoff (24) aus einem Thermoplast-Elastomer, insbesondere aus einem modifizierten Polyamid, einem Styrol-Ethylen-Butylene-Styrol-Copolymer, und/oder einem Polypropylen bestehen.

4. Akkumulator nach Anspruch 1, 2, oder 3,
dadurch gekennzeichnet, daß
die Polkappe (19) des Polkontakts (7, 8) durch Punktschweißen mit der Durchführung (18) verbunden ist und tassenartig einen Teil des weichen Kunststoffs (14) übergreifft.

5. Akkumulator nach Anspruch 1, 2, oder 3,
dadurch gekennzeichnet, daß
die Durchführung (18) des Polkontaktes einen im wesentlichen tassenförmigen Niet bildet, dessen umgebördeltes Ende (23) einen Teil des harten Kunststoffes (24) so hintergreift, daß der Polkontakt (7, 8) und/oder dessen Durchführung (18) in dichtender Anlage am weichen Kunststoff (14) gehalten ist.

6. Akkumulator nach Anspruch 5,
dadurch gekennzeichnet, daß
das umgebördelte Ende (23) des Niet eine zwischen Niet und Gehäuse eingelegte leitfähige Lasche (25) hintergreift.

7. Akkumulator nach einem der vorstehenden Ansprüche,
dadurch gekennzeichnet, daß
das Gehäuse (2, 3) ein zwischen zwei Gehäuseteilen (2, 3) umlaufendes Volumen (12) enthält, das mit dem weichen Kunststoff als Dichtung ausgefüllt ist.

8. Akkumulator nach Anspruch 7,
dadurch gekennzeichnet, daß
der weiche Kunststoff (14) innerhalb des Volumens (12) und der weiche Kunststoff (14) im Bereich der Polkontakte (7, 8) miteinander verbunden sind.

9. Akkumulator nach einem der vorstehenden Ansprüche,
dadurch gekennzeichnet,daß
das Gehäuse (2, 3) vollständig aus Kunststoff (14, 24) besteht und die beiden Gehäuseteile (2, 3) durch Ultraschallschweißen in einem überlappenden Bereich (9, 10) miteinander verbunden sind.

10. Akkumulator nach einem der Ansprüche 1 bis 8,
dadurch gekennzeichnet,daß
das Gehäuse (2, 3) vollständig aus Kunststoff (14, 24) besteht und die beiden Gehäuseteile (2, 3) durch in einem überlappenden Bereich (9, 10) angeordnete Rastelemente (30, 31) miteinander verbunden sind.

11. Akkumulator nach einem der vorstehenden Ansprüche,
dadurch gekennzeichnet,daß
in den harten Kunststoff (24) Glasfasern eingebettet sind.

12. Akkumulator nach einem der vorstehenden Ansprüche,
dadurch gekennzeichnet, daß
das Gehäuse (2, 3) prismatisch, insbesondere rechteckig, ist und die Elektroden (5, 6) schichtweise jeweils durch den Separator (4) getrennt übereinander angeordnet sind, wobei hinter den Polkontakten (7, 8) angeordnete von den Elektroden (5, 6) seitlich hervostehende Anschlußfahnen (27, 28) miteinander und mit dem jeweiligen Polkontakt (7, 8), vorzugsweise durch Punktschweißen, elektrisch verbunden sind.

13. Akkumulator nach einem der vorstehenden Ansprüche,
dadurch gekennzeichnet, daß
eine Sollbruchstelle (15) als verdünnt ausgebildeter Abschnitt innerhalb des aus hartem Kunstststoff (24) bestehenden Teils des Gehäuses (2, 3) angeordnet ist.

14. Akkumulator nach einem der vorstehenden Ansprüche,
dadurch gekennzeichnet, daß
das Gehäuse (2, 3) eine Befüllungsöffnung (16) aufweist, die mit geringerem Abstand zum positiven Polkontakt (7) als zum negativen Polkontakt (8) angeordnet ist und mit einem im Profil T-förmigen Stopfen (17) verschlossen ist.

15. Akkumulator nach einem der vorstehenden Ansprüche,
dadurch gekennzeichnet, daß
das Gehäuse (2, 3) des Akkumulators (1) einen Teil eines Gerätegehäuses eines elektrischen Gerätes bildet.

## Claims

1. A battery having a gas-tight and liquid-tight casing filled with electrolyte and containing electrodes separated from one another by a separator and electrically connected to respective terminal contacts accessible from the outside of the casing, characterised in that the casing (2, 3), in the region of the terminal contacts (7, 8), is made of a soft plastic (14) and a hard plastic (24) permanently connected to one another, the soft plastic (14) forming a seal for the terminal contacts (7, 8) and/or the bushings (18) for the terminal contacts (7, 8).

2. A battery according to claim 1, characterised in that the soft plastic (14) and the hard plastic (24) of the casing (2, 3) are interconnected over their entire surface by injection-welding.

3. A battery according to claim 1 or 2, characterised in that the soft plastic (14) and the hard plastic (24) consist of a thermoplastic elastomer, more particularly a modified polyamide or a styrene-ethylene-butylene-styrene copolymer and/or a polypropylene.

4. A battery according to claims 1, 2, or 3,
characterised in that the pole cap (19) of the terminal contact (7, 8) is connected by spot welding to the bushing (18) and extends in the form of a cup over a part of the soft plastic (14).

5. A battery according to claim 1, 2 or 3,
characterised in that the bushing (18) of the terminal contact forms a substantially cup-shaped rivet having a flanged end which extends under a part of the hard plastic (24) in such a manner that the terminal contact (7, 8) and/or its bushing (18) is held in sealing-tight abutment against the soft plastic (14).

6. A battery according to claim 5, characterised in that the flanged end (23) of the rivet extends behind a conductive plate (25) inserted between the rivet and the casing.

7. A battery according to any of the preceding claims, characterised in that the casing (2, 3) contains a peripheral space (12) between two parts (2, 3) of the casing and filled with the soft plastic as a seal.

8. A battery according to claim 7, characterised in that the soft plastic (14) inside the space (12) and the hard plastic (14) are interconnected in the neighbourhood of the terminal contacts (7, 8).

9. A battery according to any of the preceding claims, characterised in that the casing (2, 3) is made entirely of plastic (14, 24) and the two parts (2, 3) of the casing are interconnected by ultrasonic welding in an overlapping region (9, 10).

10. A battery according to any of claims 1 to 8,
characterised in that the casing (2, 3) is made entirely of plastic (14, 24) and the two parts (2, 3) of the casing are interconnected by catch elements (30, 31) disposed in an overlapping region (9, 10).

11. A battery according to any of the preceding claims, characterised in that glass fibres are embedded in the hard plastic (24).

12. A battery according to any of the preceding claims, characterised in that the casing (2, 3) is prismatic, more particularly rectangular, and the electrodes (5, 6) are disposed in layers over one another and respectively separated by the separator (4), and connecting lugs (27, 28) disposed behind the terminal contacts (7, 8) and projecting laterally from the electrodes (5, 6) are electrically connected to one another and to the respective terminal contact (7, 8), preferably by spot welding.

13. A battery according to any of the preceding claims, characterised in that a set breaking point (15) is provided in the form of a thin portion inside the part of the casing (2, 3) consisting of hard plastic (24).

14. A battery according to any of the preceding claims, characterised in that the casing (2, 3) has a filling opening (16) disposed at a shorter distance from the positive terminal contact (7) than from the negative terminal contact (8) and closed by a plug (17) which is T-shaped in cross-section.

15. A battery according to any of the preceding claims, characterised in that the casing (2, 3) of the battery (1) forms part of a casing of an electrical appliance.

## Revendications

1. Accumulateur pourvu d'un boîtier étanche aux gaz et aux liquides, rempli d'électrolyte,
dans lequel sont disposées des électrodes séparées l'une de l'autre par un séparateur, électrodes qui sont reliées électriquement respectivement à des contacts polaires accessibles du côté extérieur du boîtier, caractérisé par le fait que
le boîtier (2,3) se compose dans la région des contacts polaires (7,8) d'une matière plastique souple (14) et d'une matière plastique dure (24), qui sont reliées solidement l'une à l'autre, la matière plastique souple (14) formant une garniture d'étanchéité pour les contacts polaires (7,8) et/ou les traversées (18) des contacts polaires (7,8).

2. Accumulateur selon la revendication 1, caractérisé par le fait que la matière plastique souple (14) et la matière plastique dure (24) du boîtier (2,3) sont reliées l'une à l'autre sur toute leur surface par soudage par injection.

3. Accumulateur selon la revendication 1 ou 2, caractérisé par le fait que la matière plastique souple (14) et la matière plastique dure (24) se composent d'un élastomère-thermoplastique, en particulier d'un polyamide modifié, d'un copolymère styrène-éthylène-butène-styrène, et/ou d'un polypropylène.

4. Accumulateur selon la revendication 1, 2 ou 3, caractérisé par le fait que le capuchon de pôle (19) du contact polaire (7,8) est lié par soudage par point à la traversée (18) et recouvre à la manière d'une tasse une partie de la matière plastique souple (14).

5. Accumulateur selon la revendication 1, 2 ou 3, caractérisé par le fait que la traversée (18) du contact polaire constitue un rivet essentiellement en forme de tasse, dont l'extrémité (23) entourée par un collet vient en prise derrière une partie de la matière plastique dure (24) de sorte que le contact polaire (7,8) et/ou la traversée (18) de celui-ci est maintenu en appui étanche contre la matière plastique souple (14).

6. Accumulateur selon la revendication 5, caractérisé par le fait que l'extrémité (23) entourée par un collet du rivet vient en prise derrière une languette conductrice (25) insérée entre le rivet et le boîtier.

7. Accumulateur selon l'une des revendications précédentes, caractérisé par le fait que le boîtier (2,3) renferme un volume (12) tournant entre deux parties de boîtier (2,3), volume qui est rempli de matière plastique souple comme garniture d'étanchéité.

8. Accumulateur selon la revendication 7, caractérisé par le fait que la matière plastique souple (14) à l'intérieur du volume (12) et la matière plastique souple (14) dans la région des contacts polaires (7,8) sont reliées l'une à l'autre.

9. Accumulateur selon l'une des revendications précédentes, caractérisé par le fait que le boîtier (2,3) se compose entièrement de matière plastique (14,24) et que les deux parties de boîtier (2,3) sont reliées l'une à l'autre par soudage par ultrasons dans une zone de recouvrement (9,10).

10. Accumulateur selon l'une des revendications 1 à 8, caractérisé par le fait que le boîtier (2,3) se compose entièrement de matière plastique (14,24) et que les deux parties de boîtier (2,3) sont reliées l'une à l'autre par des éléments d'encliquetage (30,31) disposés dans une zone de recouvrement (9,10).

11. Accumulateur selon l'une des revendications précédentes, caractérisé par le fait que des fibres de verre sont noyées dans la matière plastique dure (24).

12. Accumulateur selon l'une des revendications précédentes, caractérisé par le fait que le boîtier (2,3) est prismatique, en particulier rectangulaire, et que les électrodes (5,6) sont disposées l'une sur l'autre par couches séparées respectivement par le séparateur (4), des cosses de raccordement (27,28) disposées derrière les contacts polaires ( 7,8) faisant saillie latéralement à partir des électrodes (5,6) et étant reliées électriquement au contact polaire respectif (7,8), de préférence par soudage par point.

13. Accumulateur selon l'une des revendications précédentes, caractérisé par le fait qu 'un emplacement destiné à la rupture (15) en tant que section réalisée amincie est disposé à l'intérieur de la partie du boîtier (2,3) se composant de matière plastique dure (24).

14. Accumulateur selon l'une des revendications précédentes, caractérisé par le fait que le boîtier (2,3) comporte un orifice de remplissage (16), qui est disposé à plus faible distance du contact polaire positif (7) que du contact polaire négatif (8) et qui est fermé par un bouchon (17) à profil en forme de T.

15. Accumulateur selon l'une des revendications précédentes, caractérisé par le fait que le boîtier (2,3) de l'accumulateur (1) constitue une partie d'un boîtier d'appareil d'un appareil électrique.
